# EUROPEAN PATENT SPECIFICATION

(11) **EP 1 921 055 B1**
(45) Date of publication and mention of the grant of the patent: **11.12.2013**
(21) Application number: 06781766.8
(22) Date of filing: 27.07.2006
(51) Int. Cl.: C04B 41/89, C04B 41/86, C03C 17/00, C03C 8/16, B41M 5/52, C09D 11/00

(54) **METHOD FOR INK JET PRINTING ON INORGANIC SUBSTRATE**
VERFAHREN ZUM TINTENSTRAHLDRUCKEN AUF ANORGANISCHEM SUBSTRAT
PROCÉDÉ D IMPRESSION JET D'ENCRE SUR UN SUBSTRAT INORGANIQUE

(30) Priority: 12.08.2005 JP 2005234365
(43) Date of publication of application: 14.05.2008
(73) Proprietor: SEIREN CO., LTD., Fukui-shi, Fukui-ken 918-8560 (JP)
(72) Inventor: ITO, Yoshikatsu, Fukui-shi, Fukui 9188560 (JP)
(74) Representative: Bongiovanni, Simone
(86) International application number: PCT/JP2006/314855
(87) International publication number: WO 2007/020779

(56) References cited:
- JP-A- 05 221 684
- JP-A- 2004 099 432
- JP-A- 2004 099 432
- JP-A- 2005 154 186
- JP-A- 2005 170 705

## Description

### TECHNICAL FIELD

The present invention relates to a method for ink jet printing, which is suitable for image formation on an inorganic substrate by an ink jet method.

### BACKGROUND ART

In recent years, employing an ink jet method has been attracting attention as a method for pigmenting on an inorganic substrate such as pottery, glass, enamel and metal. Advantages of employing an ink jet method are applicable to multicolored expression, more repeatable comparing with other methods such as hand painting, and useful for mass-production, meanwhile employing easily to personal order comparing with other methods such as screen printing method.

Previously, the inventors have suggested the methods for ink jet printing on the inorganic substrate as described in JP-A-2004-099432, JP-A-2005-154186 and JP-A-2005-170705. The basic idea of the methods described above is that the ink receptive layer comprising the glass frit and the organic binder on the inorganic substrate is formed in advance, then ink jet printing and baking are conducted to provide the bleed-free printed article.

However, the method described above can not completely solve the problem that concentration of pigmenting content is limited in the narrow range when ink jet method is applied. Therefore, there is necessity to develop an ink jet method for obtaining a printed article which has high-density and bleeding-free image.

### DISCLOSURE OF INVENTION

The present invention provides a method for ink jet printing, which is suitable for image formation on an inorganic substrate by an ink jet method, and a method for ink jet printing on an inorganic substrate which can obtain a printed article having a high-density and bleeding-free image.

Namely, the present invention is characterized by:
a method for ink jet printing on an inorganic substrate by employing an ink comprising an inorganic pigment and a dispersion medium, the method comprising the steps of:
   (a) arranging an ink receptive layer on the inorganic substrate employing a treatment liquid containing a nonmetal salt, a glass frit, and an organic binder as indispensable components,
   (b) conducting ink jet printing and further baking.

The treatment liquid preferably contains 3 % to 15 % by weight of a nonmetal salt.

The nonmetal salt is preferably an ammonium salt.

The ammonium salt is preferably an ammonium sulfate.

The inorganic substrate has water absorbing property.

### BEST MODE FOR CARRYING OUT THE INVENTION

The present invention is described in the following. An ink receptive layer is arranged on an inorganic substrate employing a treatment liquid containing a nonmetal salt, a glass frit and an organic binder as indispensable components, to hold large amount of an ink on surface of the substrate, as permeation of the ink to the substrate can be inhibited by generating destruction of dispersion state according to salting-out effect when the ink for ink jet containing an inorganic pigment and a dispersion medium is imaged on the inorganic substrate, namely at the moment of contacting the ink onto the substrate. After baking, a printed article can be obtained, which has high-density and bleeding-free image. In addition, a metal-free salt is employed as a salt, and salt component is all burned out in the baking. Thus, color of the printed article is not affected. Besides, salt component of a nonmetal salt is nonexistent as a liquid at the temperature when a glass frit is molten. Thus, the inorganic pigment is not needed to permeate into the substrate more than necessary.

Increasing density of the printed article of the present invention according to salting-out effect can decrease concentration of the ink for ink jet comparing with the previous methods, wherein higher density of the printed article is obtained by increasing concentration of the ink for ink jet. Thus, the present invention can solve concerned problems in case of thickening concentration of the ink for ink jet, such as sedimentation of inorganic pigment particles and high-viscosity of ink.

The suitable nonmetal salt employed in the present invention is an ammonium salt. Examples of the ammonium salt are ammonium nitrate, ammonium sulfate, ammonium carbonate, ammonium chloride, and ammonium acetate. Of these, ammonium sulfate is preferable from the viewpoint of high aqueous solubility and safety. Amount of the additive is preferably 3 % to 15 % by weight of a treatment liquid, more preferably 5 % to 15 % by weight. When amount of nonmetal salt is less than 3 % by weight, sufficient salting-out effect can not be expected. When amount of nonmetal salt is more than 15 % by weight, higher salting-out effect can not be expected, to result in waste of money.

A substrate applied to the method of the present invention is an inorganic substrate such as glass, pottery, enamel, tile, or metal, but material of the inorganic substrate is not particularly limited. Of these, the inorganic substrate having aqueous absorbing property is particularly preferable because higher density imaging can be performed by the method of the present invention. Examples of inorganic substrate having aqueous absorbing property are unglazed substrates produced by the process comprising, milling alone or in a mixture of two or more of chemical materials such as silicon dioxide, ferric oxide, aluminum oxide, sodium oxide, potassium oxide, and magnesium oxide, or natural materials such as clay, sericite, pottery stone, borate mineral, feldspar, silica stone, limestone, dolomite, and kaoline by employing a device such as ball mill while adding water, molding by dry or wet process, and firing at a temperature of 800 to 1000°C.

The glass frit employed in the present invention mainly contains silicon dioxide as a main component. Adjuvants are added according to intended use. Examples of adjuvants can be lithium carbonate, sodium carbonate, potassium carbonate, lead oxide, bismuth oxide, barium carbonate, strontium carbonate, calcium carbonate, magnesium carbonate, zinc oxide, aluminum oxide, aluminum hydroxide, boric acid, zirconium oxide, titanium oxide, and further a mixture of natural materials such as feldspar, silica stone, borax, kaolin. The materials described above can be employed alone or in a mixture of two or more. The glass frit is selected to have relevant coefficent of thermal expansion and softening point from the viewpoint of adhesive property and prevention of cracking. Baking is conducted at the temperature around the softening point of the glass frit. In addition, a pigment is preferably added, which is whitened after baking to the glass frit, because printed ink thereon is expected to improve color repeatability and clarity.

Particle size of the glass frit can be applied voluntarily. Of these, particle size of 1 to 30 micron is preferably applied from viewpoints of aqueous absorbing and coating property.

The organic binder employed in the present invention can be anything that showing solubility and aqueous dispersion property, being solidified by drying, or being solid state at room temperature. The examples are naturally-ocurring polymers such as starch, natural gum, vegetable protein, algae, casein, gelatin, and sodium alginate, semisynthetic polymers such as ether cellulose, ester cellulose, ether starch, ester starch, and processing natural rubber, and synthetic polymers such as polyvinyl alcohol, polyethylene glycol, polyvinyl acetate, polyvinyl butyral resin, polyvinyl acrylate resin, polyvinyl methyl resin, crosslinked polyacrylic acid, sodium polyacrylate, polyacrylic ester, polyacrylamide, sodium methacrylate, polybutadiene, polyurethane, polyester, and polylactic acid. The materials described above are employed alone or in a mixture of two or more. Of these, the organic binder having high aqueous absorption property is preferably employed in order to enhance ink absorption. Furthermore, of these, metal-free materials are more preferable in adhesive component. The reason is that metals may deteriorate the transparency of the ink receptive layer so that a metallic atom is oxygenated while baking.

In the present invention, in addition to a nonmetal salt, a glass frit, and an organic binder as indispensable components, other additives and solvent can be added in the ink receptive layer according to need. Examples of the additive are dispersing agent, thermal stabilizer, anti-oxidant, anti-reducing agent, preservative, pH adjustor, anti-foaming agent, wetting agent, and penetrating agent. Example of the solvent is water in order for enhancing flow property.

As a method for forming the ink receptive layer, any methods can be applied. Examples of the method are coating method, spraying method, and ink-jet method. Furthermore, thickness of the ink receptive layer differs from materials of ink composition and inorganic substrate. Considering ink receptivity, the dried thickness is preferably 50 to 500 micron, more preferably in the range of 200 to 400 micron. When thickness of given ink receptive layer is less than 50 micron, enhancement of ink receptivity is not sufficient. When thickness of given ink receptive layer is more than 500 micron, crack can be generated after baking.

In the present invention, after ink receptive layer is arranged on inorganic substrate, the substrate is dried, then ink jet printing is conducted by employing an ink containing an inorganic pigment and a medium to disperse the pigment.

Examples of the inorganic pigment component is metals or metallic oxides such as titanium oxide, zinc sulfide, black iron oxide, black copper oxide, black chromium oxide, yellow iron oxide, yellow nickel-titanium, cadmium sulfide, selenium, cadmium selenide, lead chromate, lead molybdate, red iron oxide, cobalt oxide, hydrated chromium oxide, chromium oxide, gold, antimonial lead, nickel oxide, manganese oxide, neodymium oxide, erbium oxide, ceric oxide, and aluminum oxide. Other metals or metallic oxides also can be employed naturally as inorganic pigment.

The inorganic pigment can be employed alone or in a mixture of two or more. When the materials are baked with mixing color, some combinations may cause chemical changes and change to different color far from the presumed by subtractive color mixture. Thus, the relevant combination is selected for use.

A medium dispersing the inorganic pigment is not particularly limited and the examples are water, organic solvent, wax, and mixture thereof. In addition, dispersing agent such as surface-active agent can be added alone or in a mixture in order for improving dispersion of inorganic pigment in the medium. Additives can be added naturally according to need, and the examples are heat stabilizer, anti-oxidant, anti-reducer, antiseptic agent, pH adjuster, anti-foaming agent, wetting agent, and penetrating agent.

As surface-active agent, the examples of anionic surface-active agent are fatty acid soap, alkyl succinate, sodium alkyl-benzenesulfonate, sodium alkyl-naphthalenesulfonate, sodium alkyl-sulfate, sodium polyoxyethylene alkyl-ether sulfate, sodium dialkyl-sulfosuccinate, sodium alkyl-phosphate, and polycarboxylate-type high-molecular surface active agent, the examples of cationic surface-active agent are alkyl-trimethyl ammonium chloride and alkyl-dimethyl benzyl ammonium chloride, the examples of nonionic surface active agent are polyoxyethylene alkyl ether, polyoxyethylene alkyl aryl ether, and sorbitan fatty acid ester, and the examples of ampholytic surface active agent are alkyl-betaine and betaine-amide. Herein, the examples of anionic surface-active agent can not be only sodium salts, but also voluntary metal salts and ammonium salts.

As dispersing agent for solid ink such as hot-melt ink, wax group is employed in addition to the above surface-active agent. Besides, in addition to the above dispersing agents, anything having dispersion effect can be employed voluntarily.

Furthermore, glass frit can be added to the inorganic pigment ink employed in the present invention, but amount of the glass frit is preferably small to the utmost. As excess amount of the glass frit prevents high-concentration of colorant components, it is difficult to obtain a printed article having high-density. Thus, the glass frit free ink composition is preferable in principle, but it is not limited when the inorganic pigment can not be stably produced without adding required minimum glass frit component such as gold.

The inorganic pigment ink employed in the present invention can be obtained by mixing the materials described above, further dispersing a mixture thereof by employing roll mill, ball mill, colloid mill, jet mill, and bead mill, and then filtrating.

The ink employed in the present invention can be applied anything that contains inorganic pigment and medium dispersing the inorganic pigment, and the examples are liquid ink, hot-melt ink such as solid ink and photo-setting ink.

Pigment content in the ink can be in the range of 1 % to 40 % by weight, and low-concentration ink is preferable, which ranges 5 % to 20 % by weight, more preferably 5 % to 10 % by weight. In addition, amount of the ink per unit area can be up to 300 g/m² according to the present invention.

In addition, the ink jet recording device employed for ink jet printing method of the present invention is not particularly limited.

In the present invention, after conducting ink jet printing by employing inorganic pigment ink as described above, further glass frit is preferably applied on surface of the recorded image. Hereby, a construction is attained that the inorganic pigment as a main component of the ink is arranged between upside and downside of the glass frits, and a state is attained that the inorganic pigment is totally coated with glass after baking. Thus, a printed article can be obtained, wherein the inorganic pigment is not peeled off and having excellent durability. In addition, burnish effect can be expected by coating with glass film on surface of the recorded image.

Herein, color of the glass frit is preferably transparent without affecting pigmentation part of the inorganic pigment. Thickness of the given glass frit is preferably in the range of 10 to 500 micron from viewpoints of lustering the inorganic pigment and protecting surface. Herein, when thickness of the given glass frit is less than 10 micron, it is difficult to function sufficiently as protective layer. When thickness is more than 500 micron, crack can be generated in case such as after baking. In addition to the above, conditions such as component of the glass frit and application method may be conducted same as arranging ink receptive layer on the inorganic substrate as described above.

In the present invention, after conducting ink jet printing, or applying further glass frit on surface of the recorded image depending on the situation as described above, objective printed article is obtained by drying and baking. The conditions such as baking temperature are not particularly limited, and it may be voluntarily set according to kinds of the glass frit.

### EXAMPLES

Hereinafter, the present invention is explained based on Examples and Comparative Examples, but not limited thereto.

### EXAMPLE 1

After weighing, the following materials were milled by ball mill with relevant moisture control and conducted dry granulation. Then, mixture was conducted press molding and dried under the conditions of 900°C for 1 hour to obtain unglazed inorganic substrate.

| | |
|---|---|
| SiO₂ | 72.0 |
| Al₂O₃ | 22.5 |
| Na₂O/K₂O | 4.0 |
| Fe₂O₃ | 0.5 |
| CaO | 0.5 |
| MgO | 0.5 |
| Total | 100 (% by weight) |

After formulating in the following, dispersion liquid of a glass frit was prepared, wherein the glass frit milled into 2 micron size of particle by ball mill.

| | |
|---|---|
| 11-3879 (semiopaque glass frit: Fellow Enamels(Japan)Limited) | 30 |
| CARRYBON B (dispersing agent, polycarboxylate-type activator: Sanyo Chemical Industries, Ltd.) | 1 |
| PEG#400 (wetting agent, polyethylene glycol: NOF CORPORATION) | 10 |
| Pure water | rest |
| Total | 100 (% by weight) |

A treatment liquid was prepared by adding nonmetal salt component and organic binder to the obtained dispersion liquid of glass frit according to the following formulation. Then the treatment liquid was coated on the inorganic substrate by employing spraying device and dried, an ink receptive layer was arranged on the inorganic substrate to be the dried thickness of 300 micron.

| | |
|---|---|
| The obtained dispersion liquid of glass frit | 89 |
| Ammonium sulfate | 10 |
| KLUCEL-M (hydroxypropyl cellulose, SANSHO Co., LTD.) | 1 |
| Total | 100 (% by weight) |

After the following formulation was dispersed by ball mill disperser, impurities were removed by filtration. Then an inorganic pigment was prepared.

### (Yellow ink)

| | |
|---|---|
| Cadmium yellow (inorganic pigment) | 10 |
| CARRYBON B (dispersing agent, polycarboxylate-type activator: Sanyo Chemical Industries, Ltd.) | 1 |
| DYNAMITE GLYCERINE (wetting agent, NOF CORPORATION) | 20 |
| Pure water | rest |
| Total | 100 (% by weight) |

### (Red ink)

| | |
|---|---|
| Gold purple (inorganic pigment) | 10 |
| CARRYBON B (dispersing agent, polycarboxylate-type activator: Sanyo Chemical Industries, Ltd.) | 1 |
| DYNAMITE GLYCERINE (wetting agent, NOF CORPORATION) | 20 |
| Pure water | rest |
| Total | 100 (% by weight) |

### (Blue ink)

| | |
|---|---|
| Cobalt aluminum chromium blue (inorganic pigment) | 10 |
| CARRYBON B (dispersing agent, polycarboxylate-type activator: | |
| Sanyo Chemical Industries, Ltd.) | 1 |
| DYNAMITE GLYCERINE (wetting agent, NOF CORPORATION) | 20 |
| Pure water | rest |
| Total | 100 (% by weight) |

### (Black ink)

| | |
|---|---|
| Cobalt ferrite black (inorganic pigment) | 10 |
| CARRYBON B (dispersing agent, polycarboxylate-type activator: Sanyo Chemical Industries, Ltd.) | 1 |
| DYNAMITE GLYCERINE (wetting agent, NOF CORPORATION) | 20 |
| Pure water | rest |
| Total | 100 (% by weight) |

Then, the ink was recorded on the inorganic substrate which formed the ink receptive layer under the following recording conditions by employing ink jet printer.

### <Recording conditions>

| | |
|---|---|
| Nozzle diameter: | 70 (µm) |
| Application voltage | 50 (V) |
| Pulse width | 20 (µs) |
| Driving frequency | 1 (kHz) |
| Resolution | 180 dpi |

### Evaluated patterns

1: fine lined pattern, 1, 5, and 10 mm in width of vertical line (amount applied: 50 g/m²)
2: plain pattern (amount applied: 250 g/m²)
3: ISO/JIS-SCD, Identification number: N3, Name: fruit basket

Patterns 1 and 2 are evaluated by employing blue ink.

After baking under the conditions of 1150°C for 45 minutes by employing pottery electric furnace, an objective printed article was obtained. The obtained printed article was evaluated by the following method. The results are shown in Table 1.

### (1) Density

Density of the obtained printed article (Evaluated pattern 2) was visually observed.
Ⓞ: Density is highly and clearly expressed
○: Density is highly expressed
Δ: Density is highly, but dully expressed
×: Density is expressed low

In addition, OD (optical density) value of blue plain pattern of Evaluated pattern 2 was measured by Macbeth RD-918 reflectance densitometer.

### (2) Bleed

Bleed of the obtained printed article (Evaluated pattern 1) was visually observed.
O: No bleed is generated, narrow line is expressed finely
Bleed is generated a little, narrow line expression is a little weak
×: Bleed is generated drastically, thin line expression is not performed absolutely

Further, the blue fine line with 1 mm width of Pattern 1 was measured by employing microscope.

### (3) Cracks

Surface or inside of the obtained printed article (Evaluated patterns 1 to 3) was virtually observed.
○: No crack is generated
Δ: Cracks are observed partly in surface or inside
×: Cracks are observed overall in surface or inside

### (4) Image quality

Image quality of the obtained printed article (Evaluated pattern 3) was virtually observed.
○: Beautiful image is printed
Δ: Some faults are observed, but it does not affect the quality
×: Many faults are observed, and the quality is bad

### EXAMPLE 2

An objective printed article was obtained by the same method as in Example 1 except that amount of ammonium sulfate was changed to 2 % by weight (the shortage was adjusted by pure water). The obtained printed article was evaluated by the following method. The results are shown in Table 1.

### EXAMPLE 3

The following formulation was prepared to obtain a dispersion liquid of the glass frit milled into 2 micron size of particle by ball mill.

| | |
|---|---|
| 12-3699 (transparent glass frit: Fellow Enamels(Japan)Limited) | 30 |
| CARRYBON B (dispersing agent, polycarboxylate-type activator: Sanyo Chemical Industries, Ltd.) | 1 |
| PEG#400 (wetting agent, polyethylene glycol: NOF CORPORATION) | 10 |
| Pure water | rest |
| Total | 100 (% by weight) |

A treatment liquid was prepared according to the following formulation by employing the obtained dispersion liquid of glass frit. A glazed ceramic tile was employed as an inorganic substrate, and the treatment liquid was coated on the tile by employing spraying device and dried. Then, an ink receptive layer was arranged to be the dried thickness of 400 micron.

| | |
|---|---|
| The obtained dispersion liquid of glass frit | 89 |
| Ammonium sulfate | 10 |
| KLUCEL-M (hydroxypropyl cellulose, SANSHO Co., LTD.) | 1 |
| Total | 100 (% by weight) |

Subsequent process was conducted same as in Example 1 except that baking temperature was changed to 830°C, to obtain objective printed article. Then, the printed article was evaluated. The results are shown in Table 1.

### COMPARATIVE EXAMPLE 1

An objective printed article was obtained by the same method as in Example 1 except that ammonium sulfate was not added (the shortage was adjusted by pure water). The printed article was evaluated. The results are shown in Table 1.

### COMPARATIVE EXAMPLE 2

An objective printed article was obtained by the same method as in Example 3 except that salt was changed to metal salt of sodium chloride. The printed article was evaluated. The results are shown in Table 1. The salt remained without decomposing or sublimating after baking process because salt was metal salt. Thus, the metal salt has been precipitated on vitrified frit layer after cooling.

**TABLE 1**

| | Ex. 1 | Ex. 2 | Ex. 3 | Com. Ex. 1 | Com. Ex. 2 |
|---|---|---|---|---|---|
| Density | Ⓞ | ○ | ○ | Δ | × |
| (OD value) | (1.27) | (1.13) | (1.12) | (1.09) | (0.89) |
| Bleed | ○ | Δ | ○ | × | × |
| (width of thin line, mm) | (1.1) | (1.7) | (1.3) | (2.5) | (2.7) |
| Crack | ○ | ○ | ○ | ○ | × |
| Image quality | ○ | ○ | ○ | × | × |

### INDUSTRIAL APPLICABILITY

According to the present invention, a method for ink jet printing, is provided, which can obtain a printed article having high-density and bleeding-free image.

## Claims

1. A method for ink jet printing on an inorganic substrate by employing an ink comprising an inorganic pigment and a dispersion medium,
said method comprising the steps of:
(a) arranging an ink receptive layer on said inorganic substrate employing a treatment liquid containing a nonmetal salt, a glass frit, and an organic binder as indispensable components,
(b) conducting ink jet printing and further baking.

2. The method of Claim 1, wherein said treatment liquid contains 3 to 15 % by weight of said nonmetal salt.

3. The method of Claim 1, wherein said nonmetal salt is an ammonium salt.

4. The method of Claim 3, wherein said ammonium salt is an ammonium sulfate.

5. The method of Claim 1, wherein said inorganic substrate has aqueous absorbing property.

## Patentansprüche

1. Verfahren für einen Tintenstrahl-Druckvorgang auf einem anorganischen Substrat unter Verwendung einer Tinte umfassend ein anorganisches Pigment sowie ein Dispersionsmedium, wobei das Verfahren die folgenden Schritte umfasst:
(a) Anordnen einer Tinten-Aufnahmeschicht auf dem anorganischen Substrat unter Verwendung einer ein Nichtmetallsalz, eine Glasfritte sowie ein organisches Bindemittel als unverzichtbare Bestandteile enthaltende Behandlungsflüssigkeit,
(b) Durchführung eines Tintenstrahl-Druckvorgangs und anschließendes Trocknen.

2. Verfahren gemäß Anspruch 1, **dadurch gekennzeichnet, dass** der Massenanteil des Nichtmetallsalzes in der Behandlungsflüssigkeit 3 bis 15% beträgt.

3. Verfahren gemäß Anspruch 1, **dadurch gekennzeichnet, dass** es sich bei dem Nichtmetallsalz um ein Ammoniumsalz handelt.

4. Verfahren gemäß Anspruch 3, **dadurch gekennzeichnet, dass** es sich bei dem Ammoniumsalz um ein Ammoniumsulfat handelt.

5. Verfahren gemäß Anspruch 1, **dadurch gekennzeichnet, dass** das anorganische Substrat wasserabsorbierende Eigenschaften aufweist.

## Revendications

1. Procédé d'impression à jet d'encre sur un substrat inorganique en employant une encre comprenant un pigment inorganique et un milieu de dispersion,
ledit procédé comprenant les étapes de :
(a) agencement d'une couche réceptrice d'encre sur ledit substrat inorganique en employant un liquide de traitement contenant un sel non métallique, une fritte de verre, et un liant organique en tant que composants indispensables,
(b) conduite d'une impression à jet d'encre et d'une cuisson ultérieure.

2. Procédé selon la revendication 1, dans lequel ledit liquide de traitement contient 3 à 15 % en poids dudit sel non métallique.

3. Procédé selon la revendication 1, dans lequel ledit sel non métallique est un sel d'ammonium.

4. Procédé selon la revendication 3, dans lequel ledit sel d'ammonium est un sulfate d'ammonium.

5. Procédé selon la revendication 1, dans lequel ledit substrat inorganique a une propriété d'absorption aqueuse.
